# EUROPEAN PATENT APPLICATION

(11) **EP 1 975 128 A1**
(43) Date of publication of application: **01.10.2008**
(21) Application number: 07713646.3
(22) Date of filing: 19.01.2007
(51) Int. Cl.: C01G 23/04, B01J 35/02, C23C 16/02

(54) **METHOD FOR PRODUCING TITANIUM OXIDE**

(30) Priority: 20.01.2006 JP 2006012555
(71) Applicant: OSAKA Titanium Technologies Co., Ltd., Amagasaki-shi, Hyogo 660-8533 (JP); Yoshihara, Masahiro, Hyogo 660-8533 (JP)
(72) Inventor: OGASAWARA, Tadashi, Amagasaki-shi Hyogo 660-8533 (JP); SHIMOSAKI, Shinji, Amagaski-shi Hyogo 660-8533 (JP); AZUMA, Kazuomi, Amagasaki-shi Hyogo 660-8533 (JP)
(74) Representative: Hartz, Nikolai
(86) International application number: PCT/JP2007/050759
(87) International publication number: WO 2007/083729

(57) **Abstract**

An even titanium oxide film is economically formed on the surface of a substrate. To actualize the film formation, an aqueous titanium tetrachloride solution containing 0.1 to 17% by weight of Ti is applied in a film-like state on the surface of a heat resistant substrate. While the liquid film state is kept as it is, the aqueous titanium tetrachloride solution is heated to 300°C or more and H₂O and HCl in the liquid film are accordingly evaporated to form a titanium oxide film. In the case where the substrate is of aluminum inferior in acid resistance, an acid-resistant film such as an oxide film is previously formed on the surface of the metal substrate.

## Description

### TECHNICAL FIELD

The present invention relates to a method for producing titanium oxide using titanium tetrachloride as a starting substance and more particularly to a method for producing titanium oxide suitable for forming a titanium oxide film on a substrate, producing a titanium oxide fine powder, and the like.

### BACKGROUND ART

Titanium oxide has attracted attention as a photocatalyst and has often been used in the form of a thin film formed on the surface of a substrate. In production of titanium oxide, titanium tetrachloride as a starting substance, more particularly its aqueous solution (an aqueous titanic acid solution), is used. The chemical composition of the aqueous titanium tetrachloride solution is shown as the chemical formula 1.

[Chemical Formula 1] TiCl₄ + H₂O→Ti(OH)ₓCl_{y} (X=1∼3, Y=3∼1)

As being understood from the chemical formula 1, the aqueous titanium tetrachloride solution contains hydrochloric acid. Further, the properties of this aqueous solution vary depending on the concentration of titanium tetrachloride. The solution has such a characteristic that TiO₂ is precipitated in a granular state when the concentration of the Ti component is less than 9% by weight, the solution becomes an aqueous transparent solution when the concentration is within 9 to 17% by weight and gelation occurs when the concentration exceeds 17% by weight. Due to such a characteristic, in production of titanium oxide, an aqueous titanium tetrachloride solution with a Ti content of 9 to 17% by weight is used and the hydrochloric acid concentration is about 15 to 20% by weight.

In addition to high reactivity of titanium tetrachloride, since the aqueous titanium tetrachloride solution is a strong hydrochloric acid solution, the solution has a high corrosive property and generates a large quantity of hydrochloric acid gas by heating and is thus a substance very difficult to handle. Therefore, at the time of actual production of titanium oxide, in many cases, a powder of titanium oxide is produced from an intermediate product easy to handle, such as hydroxycarboxylato titanium obtained by neutralization treatment of an aqueous titanium tetrachloride solution and a thin film of titanium oxide is formed by a method of sintering the produced titanium oxide powder on a substrate or applying the powder using a binder.

In the film formation method using such a titanium oxide powder, some easy methods of forming a film of titanium oxide using no titanium oxide powder have been proposed. One of the methods is a method of producing titanium oxide-containing sol by hydrolysis of an aqueous titanium tetrachloride solution, applying the sol to the surface of a substrate, and burning it to form a titanium oxide film (Patent Document 1). Further, another known method is a method of applying an intermediate product easy to handle to the surface of a substrate, heating it on the substrate to promote hydrolysis and simultaneously to perform firing (Patent Document 2).

Patent Document 1: Japanese Patent Application Laid-Open (JP-A) No. 10-53438
Patent Document 2: JP-A No. 2000-302442

These easy film formation methods are advantageous in terms of the process since no titanium oxide powder is used and thus economical. Further, in recent years, with respect to a titanium oxide film as a photocatalyst, to make the film thin is pursued and in the case of burning a powder, it is required to produce a titanium oxide fine powder for forming a thin film and it is not easy to produce the fine powder. In such circumstances, the easy methods using no titanium oxide powder are evaluated as methods for easily forming thin films. The reasons for difficulty of producing a titanium oxide fine powder will be described somewhere later.

However, with respect to the former easy film formation method, in the process of producing titanium oxide-containing sol by hydrolysis of an aqueous titanium tetrachloride solution, since titanium oxide particles are precipitated and the sol is applied, a titanium oxide film to be formed contains agglomerates of titanium oxide particles and thus it becomes impossible to obtain an even thin film. However, since hydrochloric acid is removed in the hydrolysis process, no hydrochloric acid is generated in the application process and thus deterioration of the film quality, environment deterioration and the like can be avoided.

On the other hand, with respect to the latter easy film formation method, since the intermediate product easy to handle is used as a substantial starting substance, problems of generation of hydrochloric gas in the application process and thus deterioration of the film quality are not at all caused. However, since the intermediate product is obtained via neutralization treatment, which is expensive, the product is very costly and use of the product becomes a main factor of inferiority in terms of the economy.

In this connection, the reasons of difficulty of producing a titanium oxide fine powder are as follows. The powder with a primary particle diameter of titanium oxide to be produced as small as several nm to several tens nm can be obtained, the particles are firmly coagulated in the drying process and burning process carried out thereafter and the powder to be obtained become coarse with a particle diameter of several tens µm or more. Therefore, a process of further milling the produced powder is generally needed and the difficulty of producing the fine powder with a particle diameter of 10 µm or less still remains while being unchanged.

### DISCLOSURE OF THE INVENTION

### Problems to Be Solved by the Invention

An object of the present invention is to provide a method for forming a titanium oxide film capable of economically forming an even titanium oxide film on the surface of a substrate. Another object of the present invention is to provide a method for producing titanium oxide capable of economically producing a titanium oxide fine powder.

### Means for Solving the Problems

To accomplish the above-mentioned objects, the inventors of the present invention paid attention to a technique of forming a titanium oxide film using titanium tetrachloride as a starting substance without using a costly intermediate product and have made various investigations on a method of solving precipitation of granular titanium oxide in the hydrolysis process and thus unevenness of a thin film, which are problems of the technique relevant to the film quality.

That is, in a conventional method for forming a titanium oxide film using titanium tetrachloride for starting, a titanium oxide film is formed on a substrate by the respective processes of hydrolysis, application to the substrate and burning. In the hydrolysis process, titanium oxide is precipitated in a granular state and therefore the film is formed of the particles and therefore, it becomes difficult to give evenness as described above. To solve the problem, the inventors of the present invention have planned that an aqueous titanium tetrachloride solution is directly applied to the surface of a substrate and burned and have repeated various experiments. As a result, the following new facts have been found.

As described in Patent Document 2, the direct application is known well in the case of an intermediate product such as hydroxycarboxylato titanium in which hydrochloric acid is eliminated by a neutralization treatment, however it has not been tried in the case of an aqueous titanium tetrachloride solution.

Since the aqueous titanium tetrachloride solution is a strongly acidic aqueous solution containing a large quantity of hydrochloric acid, unlike the intermediate product, in the case where the solution is directly applied to the surface of a substrate and burned, it is probably possible that a large quantity of hydrochloric acid gas is generated from a liquid film by heating for burning and that the film quality cannot be maintained; however, if the application thickness of the aqueous titanium tetrachloride solution is controlled to be thin, deterioration of the film quality due to generation of the hydrochloric acid gas can be prevented.

In the case of direct application of the aqueous titanium tetrachloride solution, hydrolysis reaction in the burning and heating process after application is promoted and there is a risk of precipitation of titanium oxide particles; however if the initial concentration of the aqueous titanium tetrachloride solution is controlled, the precipitation phenomenon of the granular titanium oxide can be avoided and a even titanium oxide film in which titanium oxide particles do not exist or are unmixed can be formed on the substrate.

In the above-mentioned manner, it is found from the experiments, investigations, and discussions carried out by the inventors of the present invention that not only the number of steps can be saved in the independent hydrolysis process and the cost can be saved remarkably but also deterioration of the film quality due to generation of hydrochloric acid gas, which is a problem in the case of using the aqueous titanium tetrachloride solution, and precipitation of titanium oxide particles can be avoided by direct application of the aqueous titanium tetrachloride solution and burning the solution and thus it is made possible to form a high quality thin film at low cost.

Simultaneously, it is also found that although it is difficult to produce a fine powder with a particle diameter of 10 µm or less by a production method of a titanium oxide powder by particle precipitation, it is made possible to very simply produce a high quality titanium oxide fine powder without quality deterioration due to generation of hydrochloric acid gas when the aqueous titanium tetrachloride solution is sprayed in the form of fine droplets and heating and burning is carried out while the droplets are kept as they are. In this connection, to make the aqueous titanium tetrachloride solution be fine droplets is easy if ultrasonic wave or the like is employed.

The above-mentioned facts are found; nevertheless the following problems are newly made clear. That is, the aqueous titanium tetrachloride solution, which is a strongly acidic aqueous solution, intensely corrodes the surface depending on the properties of a substrate. The corrosion scarcely becomes a problem in the case of a titanium-based metal with high corrosion resistance, however a problem begins occurring in the case of a stainless steel-based metal and it becomes significant in the case of an aluminum-based metal. If the corrosion of the substrate is intense, regardless of the above-mentioned problem of hydrochloric acid gas and granulation of titanium oxide, the quality (evenness and adhesion) of the titanium oxide film is considerably deteriorated and the photocatalyst characteristics are also deteriorated. That is, there is a general trend that inexpensive substrates has low corrosion resistance, on such a substrate, no sound titanium oxide film can be formed. As a result, problems that the substrate is limited to be a high grade one; application of the titanium oxide film is limited; the cost is increased; and the like cannot be avoided.

Further, countermeasure against the problems has been discussed based on another investigations and analysis and consequently, the inventors have found that it is effective to form an acid-resistant coating such as an oxide film or the like on the surface of the substrate before formation of a liquid film of the aqueous titanium tetrachloride solution on the surface of the substrate. That is, if an acid-resistant coating such as an oxide film or the like is formed on the surface of the substrate before a liquid film of the aqueous titanium tetrachloride solution is formed on the surface of the substrate, a high quality titanium oxide film can stably be formed regardless of the type of the substrate. Moreover, the acid-resistant coating can be formed by a simple method, just like heating in an atmosphere before formation of a liquid film.

Further, the previous formation of the acid-resistant coating is also effective in a method of forming a titanium oxide film by forming a titanium oxide precursor film containing chlorine on the surface of the substrate by a CVD method using titanium tetrachloride as a starting substance and thereafter heating and burning the film.

In the film formation by the CVD method, since both of titanium tetrachloride and water are supplied in the form of vapor to the substrate surface, in a strict sense, an aqueous titanium tetrachloride solution film is not formed but a titanium oxide precursor film containing chlorine, in general term, in a solid state is formed. In this connection, also in the case of forming an aqueous titanium tetrachloride solution film on the surface of the substrate, the liquid film becomes a titanium oxide precursor film containing chlorine, in general term, in a solid state is formed by drying in the initial period of the burning and both methods are common in terms of formation of the titanium oxide precursor film containing chlorine on the substrate surface after the acid-resistant coating is formed.

The production method of titanium oxide of the present invention is completed, based on the above-mentioned findings and the method is for producing titanium oxide by heating an aqueous titanium tetrachloride solution and thereby evaporating H₂O and HCl in the aqueous solution and more particularly, the method is a direct production method from titanium tetrachloride by treating an aqueous titanium tetrachloride solution in a configuration corresponding to the configuration of titanium oxide to be produced and heating the aqueous titanium tetrachloride solution as it is in the treated state.

In the case where the configuration of the titanium oxide to be produced is a thin film, the aqueous titanium tetrachloride solution is deposited just like a film on the surface of a heat resistant substrate and heated while being kept in the liquid film state to evaporate H₂O and HCl in the aqueous solution and accordingly a titanium oxide film is formed on the surface of the substrate. Further, in the case where the titanium oxide is in the form of a powder, an aqueous titanium tetrachloride solution may directly be sprayed to the heating atmosphere.

Important conditions in the production method of titanium oxide of the present invention are, in the case of coating formation, the concentration of the aqueous titanium tetrachloride solution, deposited film thickness, heating temperature, material quality of a substrate, and the like. With respect to the concentration of the aqueous titanium tetrachloride solution, it is preferably 0.1 to 17% by weight on the basis of Ti and more preferably 9 to 17% by weight. Within a concentration range of 9 to 17% by weight, the aqueous titanium tetrachloride solution becomes a colorless and transparent liquid and easy to handle and further, while started heating in this state, the solution reaches a gelation region (exceeding 17% by weight of Ti) detouring the titanium oxide precipitation region (less than 9% by weight of Ti) due to the concentration increase following the heating and thus a titanium oxide film with high evenness and free from a granular structure can be formed.

With respect to an aqueous titanium tetrachloride solution with 0.1% by weight or more and less than 9% by weight of Ti, as described above, it is conventionally supposed that TiO₂ is precipitated in a granular state and thus the solution is unsuitable for production of titanium oxide. However, according to the investigations carried out by the inventors of the present invention, it is found that if the transparent aqueous solution with a concentration of 9 to 17% by weight is used while being temporarily diluted, the TiO₂ precipitation does not become a fatal problem. That is, it is found that if the transparent aqueous solution with a concentration of 9 to 17% by weight is used after being diluted, there occurs a problem of TiO₂ precipitation in the case where the diluted solution is left for a long time after dilution, on the other hand, the aqueous solution can be used without causing the problem of TiO₂ precipitation in the case where it is not a long time from the dilution (in the case where the solution is used within a short time after dilution). Since the diluted aqueous titanium tetrachloride solution with a low concentration has low viscosity and the deposited thickness can be made thin, the solution is advantageous for use for the thin film production. The photocatalytic function is lowered if the TiO₂ film is made too thin, however, if the film has a prescribed thickness or more (depending on the wavelength), the photocatalytic function is not deteriorated even if the thickness is made thin to that extent and it is made possible to lower the raw material cost by making the film thin. Further, in the case where the substrate is flexible, the separation resistance can be improved.

With respect to the deposited film thickness of the aqueous titanium tetrachloride solution, if it is too thick, foams and the like remain in the film due to generation of hydrochloric acid gas in the heating process and the film quality is deteriorated. Therefore, the application thickness is more preferable to be thinner and the product film thickness (titanium oxide film thickness) after heating is preferably 1 µm (1000 nm) or less and more preferably 500 nm or less. With respect to the titanium oxide film as a photocatalyst, its catalytic function is not affected by the thickness. Therefore, it is advantageous to make the film thin and save the material cost and flexibility is provided by making the film thin and also from this point, the thickness is preferable to be thin. On the other hand, the lower limit of the product film thickness (titanium oxide film thickness) is preferably 20 nm or more and more preferably 50 nm or more to efficiently exhibit the photocatalytic function.

The heating temperature for the burning is preferably 300 to 600°C. If the heating temperature is low, Cl in the film cannot be completely scattered and remains. Further, the crystallization of titanium oxide to be produced becomes insufficient. For that, it becomes impossible to obtain high photocatalytic activity. On the contrary, in the case where it is too high, the crystal particle diameter becomes coarse and it is also a cause of decrease of photocatalytic activity.

The material quality of the substrate may be determined in accordance with the use; however it is required to satisfy specific condition. The first condition is to have acid resistance. Since the aqueous titanium tetrachloride solution, which is a strong hydrochloric acid solution, is applied, the material is required to be a material that is not corroded. The second condition is to have heat resistance. Since the material is subjected to heating for burning after application of the aqueous titanium tetrachloride solution, the material required to be a material that stands the heating. Examples of a material satisfying these conditions are glass fibers and ceramic parts.

A deposition method of the aqueous titanium tetrachloride solution is not particularly limited. Any method may be employed if it is suitable for depositing the solution in an even thickness on the surface of a substrate and it may be an immersion method, so-called dipping method, a spraying method such as electrostatic spraying method, and also a method using ultrasonic mist. In terms of reduction of the film thickness, the spraying method and method using ultrasonic mist are preferable.

The above is explanation of the case of producing the titanium oxide film, and also in the case of producing a titanium oxide fine powder, because of the same reasons, the concentration of the aqueous titanium tetrachloride solution to be used is preferably 0.1 to 17% by weight and more preferably 9 to 17% by weight on the basis of Ti. Further, the heating temperature is preferably 300 to 600°C. The droplet diameter corresponds to the application thickness and in order to prevent the quality deterioration due to generation of hydrochloric acid gas, since the product value is higher as the diameter of the particles to be produced is smaller, the droplet diameter is better to be smaller and preferably 10 µm or less. With respect to the lower limit of the droplet diameter, it is not particularly limited since it is much better as the droplet diameter is much smaller to produce finer titanium oxide particles.

Another production method of titanium oxide of the present invention is for previously forming an acid resistant coating on the surface of the above-mentioned substrate and thereafter forming the titanium oxide film, in the production method of titanium oxide for forming a titanium oxide film on the surface of the substrate by forming a titanium oxide precursor film containing chlorine on the surface of the substrate and successively burning the film.

To explain more substantially, at fist, an acid-resistant coating is formed on the surface of the substrate. It is not necessarily needed for a metal substrate with high corrosion resistance such as a titanium-based metal, however it is effective even for a stainless steel-based metal with relatively high corrosion resistance and it is considerably effective for substrate of metals such as an iron-based, copper-based, or aluminum-based metal and particularly it is important in the case of an aluminum-based metal. This acid-resistant coating is substantially, for example, an oxide film, a nitride film or the like, and the oxide film can be formed simply by heating the substrate in an oxygen-containing atmosphere such as an air atmosphere or the like.

After completion of the acid-resistant coating formation, the aqueous titanium tetrachloride solution is deposited in film-like state on the surface of the substrate, that is, the surface of the acid-resistant coating and the liquid film is burned by heating. H₂O and HCl in the aqueous titanium tetrachloride solution film are evaporated by heating in the burning to form, at first, a precursor film containing chlorine on the surface of the substrate and thereafter, as the burning is promoted, a titanium oxide film is formed on the surface of the substrate.

In another production method of titanium oxide of the present invention, a film obtained by the CVD method may be formed on the surface of the acid-resistant coating, in place of the aqueous titanium tetrachloride solution film. In the film formation by the CVD method, since both of titanium tetrachloride and water are supplied in form of vapor to the substrate surface, in a strict sense, an aqueous titanium tetrachloride solution film is not formed but a titanium oxide precursor film containing chlorine, in general term, in solid state is formed. On the other hand, also in the case of forming an aqueous titanium tetrachloride solution film on the surface of the substrate, the liquid film becomes a titanium oxide precursor film containing chlorine, in general term, in solid state is formed by drying in the initial period of the burning. Therefore, in this production method of titanium oxide of the present invention, a titanium oxide precursor film containing chlorine is formed on the substrate surface after the acid-resistant coating is formed.

Important conditions in this production method of titanium oxide of the present invention are, in the case of coating formation, the type of the coating, the application thickness, and the like, and in the case of formation of the aqueous titanium tetrachloride solution film and burning, the concentration of the aqueous titanium tetrachloride solution, deposited film thickness, heating temperature, and the like. With respect to the concentration of the aqueous titanium tetrachloride solution, deposited film thickness, heating temperature, and the like are according to the production method of titanium oxide described before.

A representative acid-resistant coating is an oxidation film. The oxidation film can be formed by heating in oxygen-containing atmosphere including the air atmosphere and also formed by anodization method (e.g. alumite treatment). The oxygen content in the atmosphere in the case of heating in the oxygen-containing atmosphere is preferably 0.1% or more. If the oxygen content is too low, the oxidation film formation speed is slow and therefore the productivity is decreased.
There is no upper limit of the oxygen concentration and even 100% is allowed.

With respect to the type of the acid-resistant coating, it is sufficient to protect the surface of the substrate from the aqueous titanium tetrachloride solution, and therefore, it is not limited to the oxidation film but may be a nitride film or the like. The nitride film can be formed by heating in nitrogen-containing atmosphere and the nitrogen content is preferably 0.1% or more and there is no upper limit because of the same reason as that of the oxygen content.

In the case where the acid-resistant coating is formed by heating, the heating temperature is preferably 300°C or more and (melting point of the substrate - 100°C) or less. If the heating temperature is too low, the acid-resistant coating cannot sufficiently be formed and if it is too high, there is a risk of melting and deforming of the substrate.

The thickness of the acid-resistant coating is preferably 50 nm or more and 1 µm (1000 nm) or less. In the case where the application thickness is too thin, due to occurrence of film formation defects, the effect of the present invention cannot be sufficiently obtained and if it is too thick, cracks may possibly be formed in the acid-resistant coating.

The conditions relevant to the formation and burning of the aqueous titanium tetrachloride solution are according to the conditions of the production method of titanium oxide of the present invention described before.

That is, with respect to the concentration of the aqueous titanium tetrachloride solution to be used for forming and burning of the aqueous titanium tetrachloride solution film, it is preferably 0.1 to 17% by weight on the basis of Ti and more preferably 9 to 17% by weight. Within a concentration range of 9 to 17% by weight, the aqueous titanium tetrachloride solution becomes a colorless and transparent liquid and easy to handle and further, while started heating in this state, the solution reaches a gelation region (exceeding 17% by weight of Ti) detouring the titanium oxide precipitation region (less than 9% by weight of Ti) due to the concentration increase following the heating and thus a titanium oxide film with high evenness and free from a granular structure can be formed.

With respect to an aqueous titanium tetrachloride solution with a concentration of 0.1% by weight or more and less than 9% by weight of Ti, as described above, it is conventionally supposed that TiO₂ is precipitated in a granular state and thus the solution is unsuitable for production of titanium oxide. However, according to the investigations carried out by the inventors of the present invention, it is found that if the transparent aqueous solution with a concentration of 9 to 17% by weight is used while being temporarily diluted, the TiO₂ precipitation does not become a fatal problem. That is, it is found that if the transparent aqueous solution with a concentration of 9 to 17% by weight is used after being diluted, there occurs a problem of TiO₂ precipitation in the case where the diluted solution is left for a long time after dilution, however on the other hand, the aqueous solution can be used without causing the problem of TiO₂ precipitation in the case where it is not a long time from the dilution (in the case where the solution is used within a short time after dilution). Since the diluted aqueous titanium tetrachloride solution with a low concentration has low viscosity and the deposited thickness can be made thin, the solution is advantageous for use for the thin film production. The photocatalytic function is lowered if the TiO₂ film is made too thin, however, if the film has a prescribed thickness or more (depending on the wavelength), the photocatalytic function is not deteriorated even if the thickness is made thin to that extent and it is made possible to lower the raw material cost by making the film thin. Further, in the case where the substrate is flexible, the separation resistance can be improved.

With respect to the deposited film thickness of the aqueous titanium tetrachloride solution, if it is too thick, foams and the like remain in the film due to generation of hydrochloric acid gas in the heating process and the film quality is deteriorated. Therefore, the application thickness is more preferable to be thinner and the product film thickness (titanium oxide film thickness) after heating is preferably 1 µm (1000 nm) or less and more preferably 500 nm or less. With respect to the titanium oxide film as a photocatalyst, its catalytic function is not affected by the thickness. Therefore, it is advantageous to make the film thin and save the material cost and flexibility is provided by making the film thin and also from this point, the thickness is preferable to be thin. On the other hand, the lower limit of the product film thickness (titanium oxide film thickness) is preferably 20 nm or more and more preferably 50 nm or more to efficiently exhibit the photocatalytic function.

The heating temperature for the burning is preferably 300 to 600°C. If the heating temperature is low, Cl in the film cannot be completely scattered and remains. Further, the crystallization of titanium oxide to be produced becomes insufficient. For that, it becomes impossible to obtain high photocatalytic activity. On the contrary, in the case where it is too high, the crystal particle diameter becomes coarse and it is also a cause of decrease of photocatalytic activity.

The material quality of the substrate may be determined in accordance with the use; however since the substrate is subjected to heating for acid-resistant coating formation and heating for burning, it is required to have heat resistance capable of standing the heating. However, this production method of titanium oxide of the present invention involving the acid-resistant coating formation beforehand, the acid resistance of the substrate itself is not necessary and from this point, there is no limit. Examples of practical materials are as metals, aluminum or its alloys (aluminum-based metals), stainless steel, copper or copper alloys (copper-based metals), and various kinds of iron alloys (iron-based metals). The oxidation film in the case of an iron-based substrate, a film of not red rust (Fe₂O₃) but black rust (Fe₃O₄: triiron tetraoxide) is effective.

The shape of the substrate is generally a plate-like shape, however it may be fibrous, granular, rod-like, or porous and the type is not particularly limited.

A method for forming a liquid film of the aqueous titanium tetrachloride solution is not particularly limited. Any method may be employed if it is suitable for depositing the solution in an even thickness on the surface of a substrate and it may be an immersion method, so-called dipping method, a spraying method such as electrostatic spraying method, and also a method using ultrasonic mist. In terms of reduction of the film thickness, the spraying method is preferable and the method using ultrasonic mist is more preferable. The thickness adjustment means for a liquid film of the aqueous titanium tetrachloride solution differs in accordance with the liquid film formation method. In the case of the immersion method, the liquid film thickness can be adjusted by, for example, changing the speed of wiping the substrate after immersion. In the case of the spraying method or mist method, the liquid film thickness can be adjusted by changing the spraying quantity to the substrate.

Further, with respect to the liquid film formation method, beside the precipitation of the aqueous titanium tetrachloride solution to the surface of the substrate, a method of separately spraying titanium tetrachloride and water to deposit them to the surface of the substrate may be employed. Further, another method, there is the CVD method described in Patent Document 3. This method is a method of separately supplying titanium tetrachloride vapor and steam and causing collision of them in mixed state to the surface of the substrate and no aqueous titanium tetrachloride solution coating is formed but a precursor film containing chlorine in almost solid phase is formed. The precursor film has high evenness and improves the evenness and separation resistance of the titanium oxide film after burning.

Patent Document 3: JP-A No. 2005-29866

### Effects of the Invention

The production method of titanium oxide of the present invention is very economical sine a thin film or a fine powder of titanium oxide is directly formed from an aqueous titanium tetrachloride solution. Further, although the aqueous titanium tetrachloride solution, which is a strong hydrochloric acid, is used and a simple film formation method is employed, high film quality can stably be assured. Accordingly, high quality titanium oxide can be made available at a low cost in markets and it brings a remarkable industrial value. Best Modes For Carrying Out the Invention

Hereinafter, embodiments of the present invention will be described.

In this embodiment, an aqueous titanium tetrachloride solution is applied to the surface of a substrate having acid resistance and heat resistance, such as a ceramic or the like. A coating method is, for example, an ultrasonic mist method and the thickness of the coating solution in this case is, for example 300 µm or less. The acid resistance required for the substrate means no reaction with the aqueous titanium tetrachloride solution to be used. The concentration of the aqueous titanium tetrachloride solution is 0.1 to 17% by weight based on Ti and more preferably 9 to 17% by weight in which the transparent liquid state can be maintained.

After completion of the application of the aqueous titanium tetrachloride solution to the substrate, the substrate is inserted into a heating furnace and heated at 300°C or more, preferably 450°C or more. In the heating process, hydrochloric acid gas and water are evaporated from the coating film and the concentration of the aqueous titanium tetrachloride solution is increased and in this process, hydrolysis occurs to finally form a solid titanium oxide film on the surface of the substrate. The chemical reaction in this case is defined by the chemical formula 2.

[Chemical Formula 2] Ti(OH)ₓCl_{y} (X=1∼3. Y=3∼1)→TiO₂ +HCl

The hydrochloric acid gas and water generated during heating do not remain in the inside since the thickness of the coating solution is thin. In the case where the concentration of the aqueous titanium tetrachloride solution is 9 to 17% by weight, the particle precipitation region is not passed during the heating. Therefore, the thin film to be formed finally becomes a titanium oxide film with evenness and free from particles and foams. The thickness of the final titanium oxide film is 1/6 to 1/3 of that of the coating liquid. Since the thickness of the coating liquid is limited to 300 µm or less, the thickness of the titanium oxide film becomes 100 µm or less.

Consequently, the high quality titanium oxide film is formed very economically on the surface of the substrate in simple process without using a costly intermediate product such as hydroxycarobxylato titanium or titanium oxide particles.

In the case of producing a titanium oxide fine powder, the aqueous titanium tetrachloride solution is sprayed. More particularly, the aqueous titanium tetrachloride solution is sprayed to the heating furnace heated at 300°C or more and preferably 450°C or more in the furnace inside. If a mist generator using ultrasonic wave is used, fine droplets with a particle diameter of 10 µm or less can be formed. The droplets are heated in the process of floating in the heated furnace, so that chlorine gas and water are removed and hydrolysis is promoted to produce a titanium oxide fine powder.

The hydrochloric acid gas and water generated during the heating do not remain in the inside since the droplets have small diameter. In the case where the concentration of the aqueous titanium tetrachloride solution is 9 to 17% by weight on the basis of Ti, the particle precipitation region is not passed during the heating. Therefore, the powder to be formed finally becomes titanium oxide particles with evenness and free from granular structure or foams. The particle diameter of the final titanium oxide particles becomes 0.34 to 0.42 time as large as that at the time of spraying. In the case where the droplet diameter at the time of spraying is limited to 10 µm or less, the particle diameter of the titanium oxide particles becomes 5 µm or less.

Consequently, a high quality titanium oxide fine powder is formed very economically in simple process without using a costly intermediate product such as hydroxycarobxylato titanium, or using a large scale reaction container, or requiring pulverization process or separation process such as sieving or the like.

Next, another embodiment of the present invention will be described.

In this embodiment, for instant, an inexpensive aluminum plate with low acid resistance or its alloy plate is used as a substrate and the substrate is passed through a heating furnace at 400°C in, for example, an air atmosphere to form an oxidation film as an acid-resistant coating on the surface of the substrate. The heat resistant temperature of aluminum or its alloy is about 650°C and there is no risk of deterioration or deformation of the substrate by the heating herein.

After completion of the acid-resistant coating formation, while the substrate is moved continuously, a titanium oxide precursor film containing chlorine is formed on the surface (surface of the acid-resistant coating). A formation method of the precursor film may be a method of forming a thin film of an aqueous titanium tetrachloride solution, for instance, a method of applying an aqueous titanium tetrachloride solution with a prescribed concentration by, for instance, an ultrasonic mist method.

The concentration of the aqueous titanium tetrachloride solution to be formed on the surface of the substrate is 0.1 to 17% by weight on the basis of Ti and preferably 9 to 17% by weight for maintaining the transparent liquid state. The thickness of the liquid film is, for instance, 300 µm or less.

When the aqueous titanium tetrachloride solution film is formed on the surface of the substrate, the substrate is successively passed through a heating furnace for burning. The heating temperature is 300°C or more and preferably 450°C or more. In an initial period of the heating process, hydrochloric acid gas and water are evaporated from the liquid film and the concentration of the aqueous titanium tetrachloride solution is increased to from a titanium oxide precursor film containing chlorine. Hydrolysis occurs by further continuing the heating and finally, a solid titanium oxide film is formed on the surface of the substrate. The chemical reaction in this case is same as defined by the chemical formula 2 described above.

The hydrochloric acid gas and water generated during heating do not remain in the inside since the thickness of the coating solution is thin. Further, in the case where the concentration of the aqueous titanium tetrachloride solution is 9 to 17% by weight, the particle precipitation region is not passed during the heating and also in the cased of 0.1 to 9% by weight, if it does not pass a long time from the dilution, particle precipitation is not caused during the heating.
Furthermore, the substrate is an aluminum-based metal with low acid resistance and the aqueous titanium tetrachloride solution, which is a strong hydrochloric acid, is applied to the surface of the substrate, however since the oxide film is formed on the surface before coating and the surface is protected by the film, no corrosion is caused by the application.

Consequently, the titanium oxide film to be formed finally is an even film excellent in evenness and separation resistance and free from particles and foams although the substrate is an aluminum-based metal with low acid resistance. The thickness of the final titanium oxide film is 1/6 to 1/3 of that of the liquid film. Since the thickness of the liquid film is limited to 300 µm or less, the thickness of the titanium oxide film becomes 100 µm or less.

Consequently, a high quality titanium oxide film is formed very economically on the surface of the inexpensive substrate in simple process without using a costly intermediate product such as hydroxycarobxylato titanium or titanium oxide particles.

As another formation method of a titanium oxide precursor film, there is a CVD method for forming a precursor film by, as described in Patent Document 3, spraying titanium tetrachloride vapor and steam at a prescribed ratio by two kind independent nozzles (nozzle type may be, for instance, slit nozzles, porous nozzles, and the like) and crossing the jet currents mutually to form a mixed gas and then depositing the mixed gas to the surface of the substrate. In this method, a titanium oxide precursor film containing chlorine is formed without forming the aqueous titanium tetrachloride solution film, and that the quality of the titanium oxide film to be formed by burning thereafter is no lower than that formed by the method involving formation of the aqueous titanium tetrachloride solution film is as described above.

### First Example

An aqueous titanium tetrachloride solution containing 9.3% by weight of Ti was deposited in an average thickness of 5 µm on the surface of a glass cloth substrate with a thickness of about 1 mm made of glass fibers with a diameter of 10 µm by an immersion method. After deposition and drying, the substrate was immediately set in a heating furnace and heated at 400°C for 1 hour. A titanium oxide film (TiO₂ film) with an average thickness of about 0.2 µm was formed on the surface of the substrate. The structure of the formed titanium oxide film showed a dense film-like configuration. Further, the result of an investigation of suitability as a photocatalyst was as follows.

A sample with a size of 40 mm square was put in a 3.5 L container having an optical window and an initial injection amount of acetaldehyde was adjusted to be 250 ppm and light with an ultraviolet ray intensity of 4 mW/cm² was radiated to carry out an acetaldehyde decomposition experiment. The generation speed of CO₂, a decomposition product, was 11 ppm/min and it showed remarkably excellent photocatalytic function.

The deposition method was changed to a spraying method from the immersion method and the deposited film thickness was changed to be 2.5 µm in average and the product film thickness was changed to be 0.1 µm in average. The structure of the formed titanium oxide film showed a dense film-like configuration. The result of an investigation of suitability as a photocatalyst carried out by the same acetaldehyde decomposition test method was that the generation speed of CO₂, a decomposition product, was 5.2 ppm/min.

As a comparative example, an aqueous titanium tetrachloride solution containing 9.3% by weight of Ti was hydrolyzed by heating at 80°C to produce sol containing titanium oxide. The sol was applied in an average thickness of 5 µm on the surface of a glass cloth substrate with a thickness about 1 mm made of glass fibers with a diameter of 10 µm by an immersion method and burned in a heating furnace under condition of 400°C and 1 hour. The structure of the titanium oxide film (TiO₂ film) formed on the surface of the substrate showed the state that granular agglomerates were unevenly deposited and thus were easily dropped at the time of handling. The thickness of the formed titanium oxide film was uneven and in a range of 0 to 0.3 µm. Further, the result of an investigation of suitability as a photocatalyst carried out by the same acetaldehyde decomposition test method was that the generation speed of CO₂ was as low as 3.1 ppm/min.

An aqueous titanium tetrachloride solution containing 9.3% by weight of Ti was sprayed in the form of droplets of about 20 µm by the ultrasonic method to atmosphere heated at 400°C. A titanium oxide (TiO₂) fine powder with a particle diameter of about 7 µm was produced. The produced titanium oxide fine powder had anatase type crystal structure and the result of an investigation of suitability as a photocatalyst carried out by the same acetaldehyde decomposition test method using 0.3 g of the powder spread to a size of 40 mm square as a sample was that the generation speed of CO₂ was as high as 8.5 ppm/min.

### Second Example

As comparative example 1, an aluminum plate with a thickness of 1 mm was used as a substrate and a titanium oxide precursor film containing chlorine was directly formed on the surface by the above-mentioned the CVD method. The titanium tetrachloride supply amount was adjusted to be 4.5 L/min and the H₂O supply amount was adjusted to be 2.4 L/min in the CVD method. The thickness of the precursor film was adjusted to be 400 nm in average by adjusting the transportation speed of the aluminum plate.

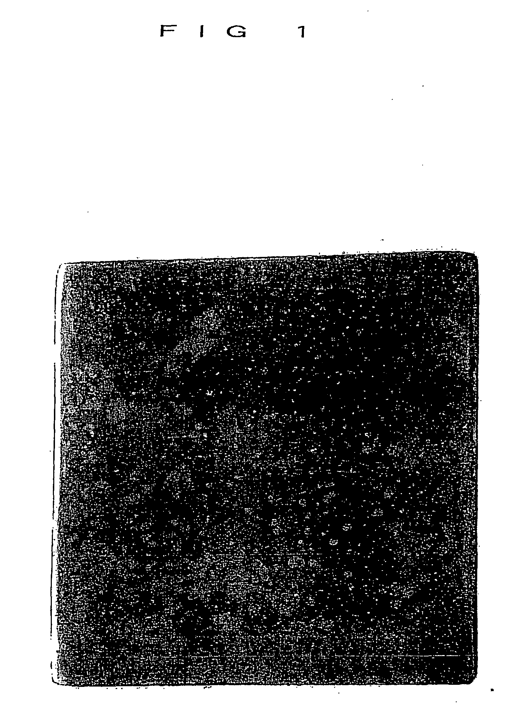

The substrate on which the precursor film was formed was heated in a heating furnace for burning in air atmosphere under condition of 400°C and 1 hour. Although a titanium oxide film (TiO₂ film) was formed on the surface of the substrate, the titanium oxide film was, as shown in Fig. 1, inferior in the film thickness evenness, separation resistance, and density and the unevenness was considerably apparent and the film failed to have a value as a photocatalyst product.

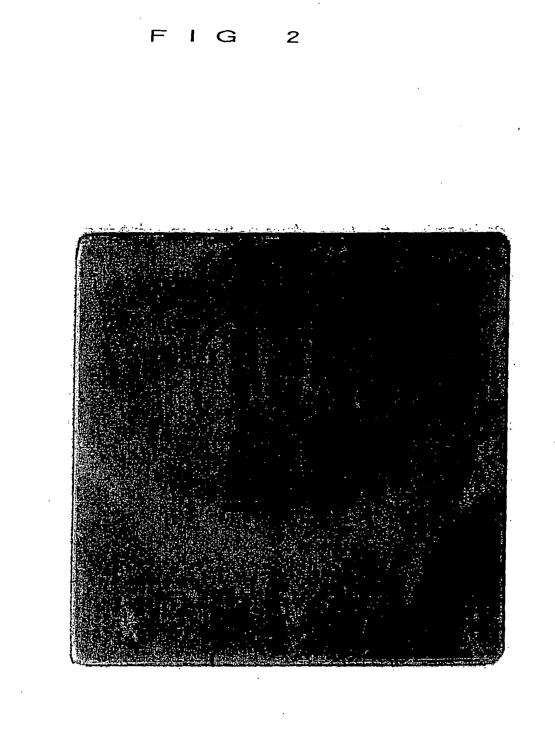

As example 1 of the present invention, before the precursor film formation in the above-mentioned comparative example 1, the above-mentioned substrate was heated in a heating furnace in an air atmosphere under condition of 400°C and 1 hour to form an oxidation film with an average thickness of 50 nm on the surface of the substrate. After formation of the oxidation film, in the same manner as in comparative example 1, the titanium oxide precursor film containing chlorine was formed and burned. The substrate surface is shown in Fig. 2, and although the inexpensive aluminum substrate same as that used in comparative example 1 was used, a titanium oxide film (TiO₂ film) having excellent film thickness evenness, separation resistance, and density far beyond those of comparative example 1 was formed on the surface of the substrate and it was luster and good in the appearance. An investigation of suitability of the formed titanium oxide film as a photocatalyst was carried out by the same acetaldehyde decomposition test method to find a result that the generation speed of CO₂, a decomposition product, was 4 ppm/min and it showed excellent photocatalytic function.

As example 2, before the precursor film formation in the above-mentioned comparative example 1, the above-mentioned substrate was anodized to form an oxidation film on the surface of the substrate. Thereafter, a CVD film of the titanium oxide precursor film containing chlorine was formed and burned in the same manner as in comparative example 1 to form a titanium oxide film. The anodization treatment was carried out at voltage of 10 V for 2 minutes using a 13 wt% aqueous sulfuric acid solution as an electrolytic solution. The average current value was 0.5 A. After the anodization treatment, the substrate was washed with water and immersed in boiling water for 1 hour as pore sealing treatment.

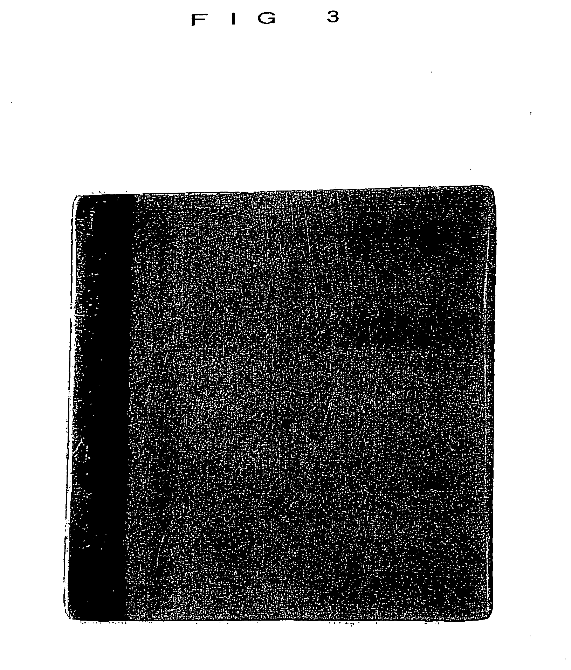

The substrate surface after the titanium oxide film formation is shown in Fig. 3, and although the economical aluminum substrate same as that used in comparative example 1 was used, a film having surface properties; more excellent separation resistance than that in example 1 and substrate corrosion scarce observed in the appearance, was obtained. An investigation of suitability as a photocatalyst was carried out by the acetaldehyde decomposition test method same as that in example 1 to find a result that the generation speed of CO₂, a decomposition product, was as remarkably high as 5.5 ppm/min.

As example 3, a precursor film was formed not by a CVD method but by applying an aqueous titanium oxide solution to an aluminum substrate subjected to anodization treatment in the same conditions as those of example 2 as the pretreatment of the substrate and drying and thereafter burning at 400°C was carried out. The formed titanium oxide film formation showed excellent separation resistance and the result of an investigation of suitability as a photocatalyst carried out by the acetaldehyde decomposition test method same as that in example 1 was that the generation speed of CO₂, a decomposition product, was as good as 3.2 ppm/min.

As comparative example 2, the substrate in comparative example 1 was changed to a stainless steel plate (SUS 304 plate) with a thickness of 1 mm. A titanium oxide film was directly formed on the surface by the substrate in the same condition except the substrate. The formed titanium oxide film was formed, in a sort, on the entire surface of the substrate and the average film thickness was 400 nm. The film thickness evenness, separation resistance, and density were considerably good as compared with those of comparative example 1; however, the result of an investigation of suitability as a photocatalyst carried out by the acetaldehyde decomposition test method same as that in example 1 was that the generation speed of CO₂, a decomposition product, was 0.5 ppm/min.

As example 4, before the precursor film formation in the above-mentioned comparative example 2, the above-mentioned substrate was heated in a heating furnace in an air atmosphere under condition of 400°C and 1 hour to form an oxidation film with an average thickness of 40 nm on the surface of the substrate. After formation of the oxidation film, in the same manner as in comparative example 2, the titanium oxide precursor film was formed and burned. Although the same substrate same as that used in comparative example 2 was used, a titanium oxide film (TiO₂ film) having excellent film thickness evenness, separation resistance, and density far beyond those of comparative example 2 was formed on the surface of the substrate and it was better in the appearance. The result of an investigation of suitability as a photocatalyst carried out by the acetaldehyde decomposition test method same as that in example 1 was that the generation speed of CO₂, a decomposition product, was as good as 3 ppm/min.

### Third Example

Oxide films with various thicknesses as acid-resistant coatings were formed on surfaces of the substrates (thickness 1.0 mm) of aluminum and stainless steel (SUS 304 and SUS 316) by anodization method or an atmospheric heating furnace. Next, titanium oxide precursor films containing chlorine with various thicknesses were formed by the above-mentioned CVD method on the surfaces of the substrates and successively heated and burned in the atmospheric heating furnace to obtain titanium oxide films (photocatalyst films). An investigation of suitability of the formed titanium oxide films as a photocatalyst was carried out by the acetaldehyde decomposition test method same as that in first example. The results of the investigation are shown in Table 1 and Table 2 in combination with the oxide films, thickness of the titanium oxide films, and the film formation conditions.

In all of first example to third example, measurement of the thickness was carried out by elemental analysis in the sample thickness direction by an auger electron spectroscopy (abbreviated as AES).

**Table 1**

| Sample No. | Substrate material | Anodization | | Oxidation by heating in atmosphere | | CVD | | Titanium oxide film thickness (*) | R value |
|---|---|---|---|---|---|---|---|---|---|
| | | Processing condition | Acid-resistant coating thickness | Treatment condition | Acid-resistant coating thickness | TiCl₄ flow rate | Water flow rate | | |
| 1 | | - | | - | | 0.4 L/min × 1 min | 0.06 L/min | 0 to 10 nm (100 nm) | 0.1 ppm/min |
| 2 | | 10 V × 1 min | 50 nm | - | | 0.2 L/min × 1min | 0.03 L/min | 18 nm | 1.2 ppm/min |
| 3 | | 10 V × 2 min | 75 nm | - | | 0.2 L/min × 2min | 0.03 L/min | 15 nm | 0.8 ppm/min |
| 4 | | 10 V × 3 min | 110 nm | - | | 0.3 L/min × 0.5 min | 0.06 L/min | 18 nm | 0.9 ppm/min |
| 5 | | 5 V × 3 min | 45 nm | - | | 0.3 L/min × 1 min | 0.04 L/min | 0 to 90 nm (70 nm) | 0.8 ppm/min |
| 6 | | 5 V × 2 min | 35 nm | - | | 0.4 L/min × 1 min | 0.06 L/min | 0 to 110 nm (100 nm) | 1.1 ppm/min |
| 7 | Aluminum | 5 V × 1 min | 25 nm | - | | 0.4 L/min × 1 min | 0.06 L/min | 0 to 100 nm (100 nm) | 1.0 ppm/min |
| 8 | | 10 V × 5 min | 500 nm | - | | 0.3 L/min × 1 min | 0.04 L/min | 30 nm | 2.5 ppm/min |
| 9 | | 10 V × 3 min | 110 nm | - | | 0.3 L/min × 2 min | 0.04 L/min | 80 nm | 2.8 ppm/min |
| 10 | | 10 V × 3 min | 120 nm | - | | 0.3 L/min × 2 min | 0.04 L/min | 100 nm | 2.9 ppm/min |
| 11 | | 10 V × 5 min | 500 nm | - | | 0.4 L/min × 1 min | 0.06 L/min | 500 nm | 4 ppm/min |
| 12 | | 15 V × 5 min | 650 nm | - | | 0.3 L/min × 1 min | 0.04 L/min | 200 nm | 3 ppm/min |
| 13 | | 10 V × 3 min | 250 nm | - | | 0.4 L/min × 1 min | 0.06 L/min | 250 nm | 4 ppm/min |
| 14 | | - | | 400°C × 1 h | 50 nm | 0.4 L/min × 1 min | 0.06 L/min | 250 nm | 5 ppm/min |
| 15 | | - | | 400°C × 2 h | 120 nm | 0.4 L/min × 1 min | 0.06 L/min | 350 nm | 5.5 ppm/min |
| 16 | | - | | 400°C × 3 h | 350 nm | 0.4 L/min × 1 min | 0.06 L/min | 250 nm | 4.5 ppm/min |
| 17 | | - | | 400°C × 1 h | 50 nm | 0.3 L/min × 1 min | 0.04 L/min | 150 nm | 4 ppm/min |

| | | | | | | | | | |
|---|---|---|---|---|---|---|---|---|---|
| (*) The numeral in the parentheses is the aimed thickness of the titanium oxide film. | | | | | | | | | |

**Table 2**

| Sample No. | Substrate material | Anodization | | Oxidation by heating in atmosphere | | CVD | | Titanium oxide film thickness | R value |
|---|---|---|---|---|---|---|---|---|---|
| | | Processing condition | Acid-resistant coating thickness | Treatment condition | Acid-resistant coating thickness | TiCl₄ flow rate | Water flow rate | | |
| 18 | | - | | - | | 0.4 L/min × 1 min | 0.06 L/min | 0 to 10 nm (500 nm) | 0.1 ppm/min |
| 19 | | - | | 400°C × 1 h | 50 nm | 0.2 L/min × 2 min | 0.03 L/min | 18 nm | 1.4 ppm/min |
| 20 | | - | | 400°C × 2 h | 80 nm | 0.2 L/min × 1 min | 0.03 L/min | 15 nm | 1.0 ppm/min |
| 21 | | - | | 500°C × 3 h | 125 nm | 0.2 L/min × 2 min | 0.03 L/min | 18 nm | 0.1 ppm/min |
| 22 | | - | | 300°C × 1 h | 35 nm | 0.4 L/min × 1 min | 0.06 L/min | 0 to 80 nm (500 nm) | 1.5 ppm/min |
| 23 | | - | | 300°C × 2 h | 35 nm | 0.4 L/min × 2 min | 0.06 L/min | 0 to 120 nm (700 nm) | 0.4 ppm/min |
| 24 | SUS304 | - | | 300°C × 3 h | 25 nm | 0.3 L/min × 2 min | 0.04 L/min | 0 to 120 nm (250 nm) | 1.0 ppm/min |
| 25 | | - | | 500°C × 2 h | 150 nm | 0.2 L/min × 3 min | 0.02 L/min | 25 nm | 0.9 ppm/min |
| 26 | | - | | 500°C × 2 h | 150 nm | 0.2 L/min × 4 min | 0.02 L/min | 55 nm | 3.5 ppm/min |
| 27 | | - | | 500°C × 2 h | 140 nm | 0.3 L/min × 0.5 min | 0.03 L/min | 110 nm | 3.6 ppm/min |
| 28 | | - | | 750°C × 1 h | 220 nm | 0.4 L/min × 1 min | 0.06 L/min | 500 nm | 7 ppm/min |
| 29 | | - | | 500°C × 2 h | 150 nm | 0.4 L/min × 1 min | 0.06 L/min | 450 nm | 6 ppm/min |
| 30 | | - | | 900°C × 3 h | 50 nm | 0.3 L/min × 1 min | 0.04 L/min | 200 nm | 4 ppm/min |
| 31 | | - | | 750°C × 1 h | 180 nm | 0.4 L/min × 2 min | 0.06 L/min | 750 nm | 7.5 ppm/min |
| 32 | SUS316 | - | | 750°C × 2 h | 900 nm | 0.4 L/min × 1 min | 0.06 L/min | 500 nm | 6.5 ppm/min |
| 33 | | - | | 750°C × 3 h | 200 nm | 0.4 L/min × 1 min | 0.06 L/min | 500 nm | 6.5 ppm/min |

| | | | | | | | | | |
|---|---|---|---|---|---|---|---|---|---|
| (*) The numeral in the parentheses is the aimed thickness of the titanium oxide film. | | | | | | | | | |

Nos. 1 to 17 in Table 1 are the cases using aluminum as a substrate. No. 1 is a case of forming a titanium oxide film on the surface of the aluminum substrate without forming the acid-resistant film (oxidation film). Separation of the titanium oxide film was significant and the catalyst effect was as low as 0.1 ppm/min on the basis of R value. Nos. 2 to 4 are the cases that although the acid-resistant films with a thickness of 50 nm or more were formed on the surfaces of the aluminum substrates, the thickness of the titanium oxide film formed thereon was so thin as to be less than 20 nm. The acid-resistant films (photocatalyst films) were formed to be sound; however since the thickness of the titanium oxide films was too thin, the catalyst effect was as low as 1.2 ppm/min on the basis of R value. On the other hand, Nos. 5 to 7 are the cases that the thickness of the acid-resistant films on the surfaces of the substrates was so thin as less than 50 nm.
Although a relatively thick titanium oxide film was tried to form on the acid-resistant films, the titanium oxide films were partially separated and at the same time, also in the portions which were not separated, the thickness became considerably uneven and the catalyst effect was as low as 1.1 ppm/min or less on the basis of R value.

On the other hand, Nos. 8 to 17 are the cases that acid-resistant films with a thickness of 50 mm or more were formed on the surfaces of the aluminum substrates and further titanium oxide films with a thickness of 20 mm or more were formed. Separation and film unevenness of the titanium oxide films were scarcely caused and the catalyst effect was as high as 2.5 ppm/min or more on the basis of R value.

Nos. 18 to 31 in Table 2 are the cases of using SUS 304 as a substrate and Nos. 32 and 33 are the cases of using SUS 316 as a substrate. No. 18 is a case of forming a titanium oxide film on the surface of the SUS 304 substrate without forming the acid-resistant film (oxidation film). The thickness of the titanium oxide film was uneven and separation of the titanium oxide film was partially caused and the catalyst effect was as low as 0.1 ppm/min on the basis of R value. Nos. 19 to 21 are the cases that although the acid-resistant films with a thickness of 50 nm or more were formed on the surfaces of the SUS304 substrates, the thickness of the titanium oxide film formed thereon was so thin as to be less than 20 nm. The acid-resistant films (photocatalyst films) were formed to be sound; however since the thickness of the titanium oxide films was too thin, the catalyst effect was as low as 1.0 ppm/min on the basis of R value. On the other hand, Nos. 22 to 25 are the cases that the thickness of the acid-resistant films on the surfaces of the substrates was so thin as less than 50 nm. Although a relatively thick titanium oxide film was tried to form on the acid-resistant films, the titanium oxide films were partially separated and the thickness became uneven and as a result, the catalyst effect was as low as 1.0 ppm/min or less on the basis of R value.

On the other hand, Nos. 25 to 33 are the cases that acid-resistant films with a thickness of 50 mm were formed on the surfaces of the SUS substrates and further titanium oxide films with a thickness of 20 mm or more were formed. Separation and film unevenness of the titanium oxide films were not caused and the catalyst effect was as high as 3.5 ppm/min or more on the basis of R value.

Fig. 1 is a photograph showing the properties of the film surface in the case where a titanium oxide film is formed on the surface of an untreated substrate.
Fig. 2 is a photograph showing the properties of the film surface in the case where the substrate surface is subjected to heat oxidation treatment before titanium oxide film formation.
Fig. 3 is a photograph showing the properties of the film surface in the case where the substrate surface is subjected to anodization treatment before titanium oxide film formation.

## Claims

1. A method for producing titanium oxide comprising heating an aqueous titanium tetrachloride solution and thereby evaporating H₂O and HCl in the aqueous solution.

2. The method for producing titanium oxide according to claim 1, wherein a titanium oxide film is formed on the surface of a substrate having heat resistance by depositing the aqueous titanium tetrachloride solution on the surface of the substrate in a film-like state, heating the aqueous titanium tetrachloride solution as it is in the liquid film state, and thereby evaporating H₂O and HCl in the liquid film.

3. The method for producing titanium oxide according to claim 2, wherein the film thickness of said titanium oxide film is 20 nm or more and 1 µm or less.

4. The method for producing titanium oxide according to claim 1 or 2, wherein the heating temperature is 300°C or more.

5. The method for producing titanium oxide according to claim 1 or 2, wherein said aqueous titanium tetrachloride solution contains 0.1 to 17% by weight of Ti.

6. A method for producing titanium oxide wherein a titanium oxide film is formed by forming a titanium oxide precursor film containing chlorine on the surface of a substrate and thereafter burning, wherein an acid-resistant coating is previously formed on the surface of said substrate and thereafter, formation of said titanium oxide film is carried out.

7. The method for producing titanium oxide according to claim 6, wherein said method for forming the titanium oxide film on the surface of the substrate is the film formation method according to claim 2.

8. The method for producing titanium oxide according to claim 6, wherein said method for forming the titanium oxide film on the surface of the substrate is a film formation method of forming a titanium oxide precursor film containing chlorine on the surface of the substrate using titanium tetrachloride as a starting substance according to a CVD method and thereafter heating and burning the film, and forming the titanium oxide film.

9. The method for producing titanium oxide according to claim 6, wherein said acid-resistant film is an oxide film or a nitride film.

10. The method for producing titanium oxide according to claim 9, wherein said oxide film is formed by heating the substrate in oxygen-containing atmosphere.

11. The method for producing titanium oxide according to claim 9, wherein said oxide film is formed by an anodization method.

12. The method for producing titanium oxide according to claim 6, wherein the thickness of said acid-resistant film is 50 nm or more and 1 µm or less.

13. The method for producing titanium oxide according to claim 6, wherein the film thickness of said titanium oxide film is 20 nm or more and 1 µm or less.

14. The method for producing titanium oxide according to claim 6, wherein said substrate is of a stainless steel, an aluminum-based metal, a copper-based metal, or an iron-based metal.
